# DEMANDE DE BREVET EUROPEEN

(11) **EP 4 220 876 A1**
(43) Date de publication de la demande: **02.08.2023**
(21) Numéro de dépôt: 23153287.0
(22) Date de dépôt: 25.01.2023
(51) Int. Cl.: H02G 1/06, B65D 85/04, B65H 49/38, B65H 75/14, B65H 49/32

(54) **DISPOSITIF DE STOCKAGE, TRANSPORT ET INSTALLATION DE FILS ET CÂBLES ÉLECTRIQUES**

(30) Priorité: 27.01.2022 FR 2200713
(71) Demandeur: Nexans, 92400 Courbevoie (FR)
(72) Inventeur: DEMULE, Christophe, 71190 Laizy (FR); BRIN, Julien, 69720 Saint-Bonnet-de-Mure (FR); SIMON, Thibaud, 69006 Lyon (FR); DELWAL, Fabien, 01320 Chalamont (FR)
(74) Mandataire: Ipsilon

(57) **Abrégé**

Ce dispositif (10) de stockage, transport et installation de fils ou câbles électriques comporte au moins un boîtier (12) en forme de roue, traversé par un arbre de rotation (14) et contenant une bobine de fil ou câble électrique mobile en rotation autour de l'arbre de rotation (14) ; et une poignée (16) en U comportant une base (160) et deux branches (162), chacune des deux branches (162) étant fixée à une extrémité opposée de l'arbre de rotation (14).

## Description

La présente invention se rapporte à un dispositif de stockage, transport et installation de fils et câbles électriques.

L'invention appartient au domaine des équipements pour fils électriques et câbles électriques dans des secteurs variés, tels le bâtiment ou l'industrie.

Pour l'installateur, les fils ou câbles électriques se présentent souvent sous forme d'une bobine emballée dans un film plastique. Cela présente divers inconvénients tout au long du transport, de l'installation et de l'utilisation de ces fils ou câbles.

En effet, typiquement, lors du transport de la bobine du camion vers le site d'installation, l'installateur a généralement déjà en main d'autres objets tels qu'une boîte à outils, une échelle, etc. et n'a donc que peu de disponibilité pour le transport de la bobine.

Puis au moment de l'installation, il est souvent difficile de dérouler le fil ou câble, car la bobine a tendance à se déplacer sur le sol.

En outre, ce type d'emballage produit généralement un entortillement du fil ou câble car celui-ci est déroulé à partir de l'intérieur de la bobine.

Par ailleurs, si l'installateur a besoin d'installer simultanément deux, voire trois fils ou câbles, il rencontre une difficulté supplémentaire étant donné que ces deux, voire trois bobines sont emballées séparément.

De plus, une fois l'installation terminée, il reste souvent du fil ou câble dans les emballages. Il n'est pas aisé de contenir ce restant de fil ou câble à l'intérieur de l'emballage ouvert, ni de le transporter.

La présente invention a pour but de remédier aux inconvénients précités de l'art antérieur.

Dans ce but, la présente invention propose un dispositif de stockage, transport et installation de fils ou câbles électriques, remarquable en ce qu'il comporte :
au moins un boîtier en forme de roue, traversé par un arbre de rotation et
contenant une bobine de fil ou câble électrique mobile en rotation autour de l'arbre de rotation ; et
une poignée en U comportant une base et deux branches, chacune des deux branches étant fixée à une extrémité opposée de l'arbre de rotation.

Ainsi, la présente invention couvre, sous une forme compacte et très simple d'utilisation, l'ensemble des fonctionnalités de stockage, de transport et d'installation de fils ou câbles électriques. Elle facilite le transport d'une bobine, par roulage du boîtier sur le sol, permet de transporter plusieurs bobines simultanément, sur l'arbre de rotation, offre un gain de temps lors de l'installation, une réduction des risques liés à la manutention, une limitation du taux de rebut et présente une empreinte environnementale réduite grâce au caractère durable de la solution de transport et de stockage et à la collecte facilitée des déchets.

Dans un mode particulier de réalisation, la base de la poignée en U présente une longueur réglable.

Cela confère un caractère modulable au dispositif, qui peut être utilisé sans modification, hormis le simple réglage de la base de la poignée, pour transporter soit une seule bobine, soit plusieurs bobines de fil ou câble.

Dans un mode particulier de réalisation, les branches de la poignée en U présentent une longueur réglable.

L'installateur peut ainsi régler la hauteur de la poignée, par exemple en fonction de sa taille, pour une meilleure ergonomie de transport.

Dans un mode particulier de réalisation, le boîtier présente sur sa circonférence au moins une ouverture adaptée au passage du fil ou câble électrique.

Cela permet de dérouler facilement le fil ou câble à partir de l'extérieur de la bobine et d'éviter ainsi l'entortillement du fil ou câble.

Dans un mode particulier de réalisation, la bobine de fil ou câble électrique est entourée sur sa circonférence d'une bande de papier kraft présentant au moins une ouverture adaptée au passage du fil ou câble électrique.

Ainsi, la bobine est emballée sans plastique et présente donc une empreinte carbone réduite.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une représentation schématique d'un dispositif conforme à la présente invention, dans un mode particulier de réalisation où il permet de transporter une seule bobine de fil ou câble électrique ;
[Fig. 2] est une représentation schématique d'un dispositif conforme à la présente invention, dans un mode particulier de réalisation où il permet de transporter simultanément trois bobines de fil ou câble électrique.
[Fig. 3] est une représentation schématique d'une bobine de fil ou câble électrique du type contenu dans un dispositif conforme à la présente invention, dans un mode particulier de réalisation.

### Description de mode(s) de réalisation

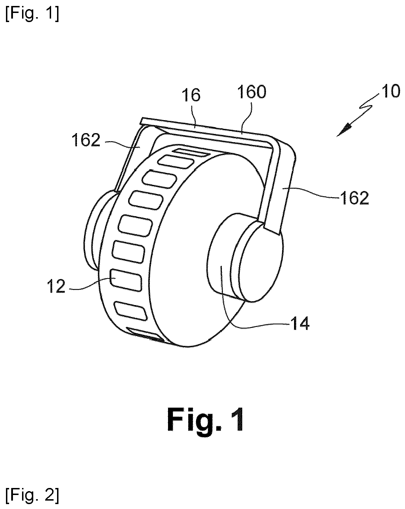

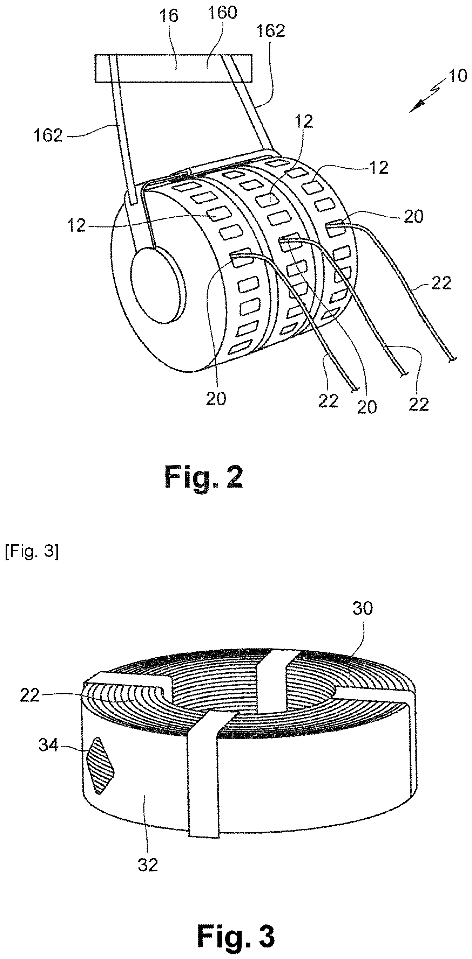

Comme le montre la figure 1, dans un mode particulier de réalisation, un dispositif 10 de stockage, transport et installation de fils ou câbles électriques conforme à la présente invention comporte un ou plusieurs boîtiers 12 en forme de roue. Ainsi, le dispositif 10 peut rouler sur le sol et est donc facilement transportable. Dans le mode de réalisation de la figure 1, le dispositif 10 comporte un seul boîtier 12 et dans le mode de réalisation de la figure 2, le dispositif 10 comporte trois boîtiers 12, ces nombres de boîtiers étant des exemples nullement limitatifs, le nombre de boîtiers pouvant être quelconque.

Le boîtier 12 est traversé par un arbre de rotation 14 et peut tourner indépendamment de celui-ci.

Le boîtier 12 contient une bobine 30 sur laquelle est enroulé un fil ou un câble 22 électrique (visible sur la figure 3). La bobine 30 est mobile en rotation autour de l'arbre de rotation 14.

Afin de pouvoir introduire la bobine 30 dans le boîtier 12, le boîtier 12 peut par exemple être formé de deux demi-coques assemblées entre elles par tout moyen approprié. Il peut s'agir, soit de deux demi-coques de forme torique, soit de deux demi-coques assemblées suivant un plan radial.

Comme le montre la figure 3, de façon optionnelle, la bobine 30 peut être entourée sur sa circonférence d'une bande de papier kraft 32, qui constitue son emballage et sur laquelle on peut porter toute indication se rapportant à l'identification du fil ou câble 22 électrique (référence, couleur, section, longueur, etc.).

Afin de pouvoir aisément dérouler le fil ou câble 22 électrique enroulé sur la bobine 30, la bande de papier kraft 32 présente une ou plusieurs ouvertures 34 adaptées au passage du fil ou câble 22 électrique. A titre d'exemple non limitatif, dans le mode particulier de réalisation illustré sur la figure 3, l'ouverture 34 est en forme de losange.

Le dispositif 10 comporte en outre une poignée 16 permettant la saisie et le transport du dispositif 10. La poignée 16 est en forme de U, le U présentant une base 160 et deux branches 162.

Chacune des branches 162 est fixée à une extrémité opposée de l'arbre de rotation 14. A cet effet, comme dans les modes de réalisation des figures 1 et 2, l'extrémité de chaque branche 162 peut par exemple être pourvue d'un capuchon en forme de disque, de même diamètre que l'arbre de rotation 14 et venant s'emboîter sur l'extrémité de l'arbre de rotation 14 en regard de la branche 162 considérée.

De façon optionnelle, la base 160 de la poignée 16 en U peut présenter une longueur réglable.

Par exemple, la base 160 de la poignée 16 peut être formée de la superposition au moins partielle d'une première partie d'un seul tenant avec l'une des branches 162 et orthogonale à celle-ci et d'une seconde partie d'un seul tenant avec l'autre branche 162 et orthogonale à celle-ci, la première partie présentant une série d'ouvertures et la seconde partie présentant une série de protubérances adaptées à se clipser et se dégager des ouvertures par simple traction sur les deux branches 162. On peut ainsi régler la longueur de la base 160 de la poignée 16 en fonction du nombre de boîtiers 12 à disposer sur l'arbre de rotation 14.

De façon optionnelle, la longueur des branches 162 peut également être réglable pour permettre une bonne ergonomie quelle que soit la taille de l'installateur. A cette fin, les branches 162 sont par exemple constituées de plusieurs segments gigognes, ce qui leur confère un caractère télescopique.

Comme le montre la figure 2, de façon optionnelle, le boîtier 12 peut présenter sur sa circonférence une ou plusieurs ouvertures 20 adaptées au passage du fil ou câble 22 électrique, permettant donc de dérouler celui-ci à l'extérieur de la bobine 30 et faisant à la fois fonction de passe-fil et de guide-fil.

Dans les modes particuliers de réalisation des figures 1 et 2, les boîtiers présentent sur leur circonférence une série d'ouvertures 20 régulièrement réparties, ce qui évite d'avoir à faire rouler les boîtiers 12 jusqu'à trouver une ouverture 20.

Avantageusement, pour permettre à l'installateur de connaître la longueur restante de fil ou câble 22 électrique sur la bobine 30 sans avoir besoin d'ouvrir le boîtier 12 et quelle que soit la section du fil ou câble 22 électrique, on peut prévoir un outil sous forme d'une règle, où se lit la correspondance entre la section, la masse de la section et le nombre de mètres restant sur la bobine 30.

## Revendications

1. Dispositif (10) de stockage, transport et installation de fils ou câbles (22) électriques, **caractérisé en ce qu'**il comporte :
au moins un boîtier (12) en forme de roue, traversé par un arbre de rotation (14) et contenant une bobine (30) de fil ou câble (22) électrique mobile en rotation autour dudit arbre de rotation (14) ; et
une poignée (16) en U comportant une base (160) et deux branches (162), chacune des deux branches (162) étant fixée à une extrémité opposée dudit arbre de rotation (14).

2. Dispositif (10) selon la revendication 1, **caractérisé en ce que** la base (160) de ladite poignée (16) en U présente une longueur réglable.

3. Dispositif (10) selon la revendication 1 ou 2, **caractérisé en ce que** les branches (162) de ladite poignée (16) en U présentent une longueur réglable.

4. Dispositif (10) selon la revendication 1, 2 ou 3, **caractérisé en ce que** ledit boîtier (12) présente sur sa circonférence au moins une ouverture (20) adaptée au passage dudit fil ou câble (22) électrique.

5. Dispositif (10) selon l'une quelconque des revendications précédentes, **caractérisé en ce que** ladite bobine (30) de fil ou câble (22) électrique est entourée sur sa circonférence d'une bande de papier kraft (32) présentant au moins une ouverture (34) adaptée au passage dudit fil ou câble (22) électrique.
